# FASCICULE DE BREVET EUROPEEN

(11) **EP 1 686 239 B1**
(45) Date de publication et mention de la délivrance du brevet: **19.09.2007**
(21) Numéro de dépôt: 06290072.5
(22) Date de dépôt: 11.01.2006
(51) Int. Cl.: F01D 5/00, F01D 5/28, F01D 9/04, C23C 28/00, F01D 17/16, B23P 6/00, F01D 7/00

(54) **Procédé de réparation d'une surface de frottement d'une aube à calage variable de turbomachine**
Verfahren zur Reparatur einer Reibungsfläche einer verstellbaren Schaufel einer Turbomaschine
Repairing process of a variable angle vane system in a turbo machine

(30) Priorité: 27.01.2005 FR 0500836
(43) Date de publication de la demande: 02.08.2006
(73) Titulaire: SOCIETE NATIONALE D'ETUDE ET DE CONSTRUCTION DE MOTEURS D'AVIATION "SNECMA", F-75724 Paris Cédex 15 (FR)
(72) Inventeur: Foucher, Christelle, 35690 Acigne (FR); Mons, Claude, 77176 Savigny le Temple (FR); Ruimi, Michel, 75010 Paris (FR)
(74) Mandataire: Ramey, Daniel

(56) Documents cités:
- EP-A- 1 197 573
- EP-A- 1 439 308
- EP-A- 1 500 791
- US-A- 5 813 118
- US-A- 5 972 424
- US-A1- 2002 197 152
- US-A1- 2004 031 140

## Description

La présente invention concerne un procédé de réparation d'une surface d'une aube à calage variable de turbomachine, en particulier de turboréacteur d'avion, et concerne également une aube à calage variable destinée à être guidée en rotation par des moyens de guidage qui sont susceptibles d'endommager plus ou moins rapidement la surface de l'aube avec laquelle ces moyens de guidage sont en contact.

On a constaté que la surface d'une aube qui est en contact avec une rondelle de guidage montée autour de la queue cylindrique de l'aube, entre cette surface de l'aube et le carter de la turbomachine, pouvait présenter assez rapidement une usure relativement importante lorsque cette rondelle de guidage comporte un bossage annulaire sur sa face de contact avec la surface précitée ou « platine » de l'aube.

Ce bossage annulaire est en effet susceptible d'user la surface de la platine de l'aube et d'y former une rainure annulaire, après quoi c'est l'ensemble de la surface de la rondelle de guidage qui vient frotter sur la platine de l'aube et la dégrade par usure.

Cela se traduit par un risque de contact entre le bord de fuite de l'aube et le carter de la turbomachine, ce qui impose le démontage et le remplacement de l'aube à calage variable. Cette opération est longue et coûteuse.

Lorsque l'aube à calage variable est en acier austénitique et que la rondelle de guidage est en acier martensitique, ce phénomène d'usure de la platine de l'aube peut se produire rapidement et pose un problème majeur.

La présente invention a pour but d'apporter une solution simple, efficace et économique à ce problème.

Elle propose à cet effet un procédé de réparation d'une surface de frottement d'une aube à calage variable d'une turbomachine telle qu'un turboréacteur d'avion, caractérisé en ce que cette surface étant une surface de frottement sur des moyens de guidage de l'aube en rotation et présentant un déficit de matière résultant de son usure, il consiste à combler ce déficit de matière par dépôt d'un produit métallique par électrolyse, puis à former sur le produit métallique déposé et sur la partie environnante de ladite surface au moins une couche mince d'un matériau dur à faible coefficient de frottement.

Cette réparation permet d'une part de rendre réutilisable l'aube à calage variable qui a été précocement usée dans les conditions précitées et d'autre part d'augmenter suffisamment sa durée de service, grâce à la protection fournie par la couche mince de matériau dur, pour ne plus courir de risques entre les visites régulières de maintenance de la turbomachine.

Le produit métallique de rechargement peut, selon l'invention, être déposé sur la surface usée d'une aube par électrolyse au tampon, ou par électrolyse en bain, ou encore par électrolyse en micro-bain en utilisant alors une faible quantité de solution électrolytique, juste suffisante pour recouvrir uniquement ou presque uniquement la surface usée de l'aube.

Un avantage important de ce procédé de dépôt métallique par électrolyse est qu'il n'est pas indispensable d'usiner préalablement la surface usée de l'aube.

Le matériau dur de protection déposé en couche mince sur le matériau métallique de rechargement peut être déposé par projection thermique, par exemple par procédé plasma ou HVOF (High Velocity Oxygen .Fuel) ou autre, ou par dépôt PVD (Physical Vapor Deposition) ou encore par électrolyse au tampon, après un usinage de rectification du matériau métallique de rechargement.

Ce matériau dur est avantageusement plus dur que celui de la rondelle de guidage et est par exemple à base de nickel, cobalt, tungstène, ou chrome, ou d'une combinaison de ces éléments telle que du nickel-cobalt, nickel-tungstène, ou cobalt-tungstène.

L'invention propose également une aube à calage variable pour un étage redresseur de turbomachine, en particulier de turboréacteur d'avion, l'aube étant guidée en rotation autour de son axe dans une cheminée d'un carter de la turbomachine et comportant à son extrémité radialement externe une surface venant en appui sur un bossage annulaire d'une rondelle de guidage montée autour d'une queue cylindrique de l'aube entre ladite surface et le carter de la turbomachine, caractérisée en ce que la partie de la surface de l'aube en contact avec le bossage annulaire de la rondelle est recouverte par une couche mince de matériau dur à faible coefficient de frottement.

Cette aube est ainsi bien protégée contre l'usure de sa platine par la rondelle de guidage et a une longue durée de service.

Il peut s'agir soit d'une aube neuve, réalisée en particulier en acier austénitique et guidée par une rondelle en acier martensitique, et dont la platine est protégée par une couche mince de matériau plus dur que celui de la rondelle de guidage, soit d'une aube qui a été réparée par exécution du procédé décrit ci-dessus et qui peut être remise en service avec une durée de vie suffisante.

L'invention sera mieux comprise et d'autres avantages, détails et caractéristiques de l'invention apparaîtront à la lecture de la description suivante faite à titre d'exemple non limitatif en référence aux dessins annexés dans lesquels :
- la figure 1 est une vue schématique partielle en coupe axiale d'un compresseur haute-pression d'une turbomachine ;
- la figure 2 est une vue partielle à plus grande échelle de la figure 1 ;
- la figure 3 est une vue schématique partielle en coupe axiale d'une aube à calage variable de turbomachine, dont la platine est usée ;
- les figures 4 à 6 représentent schématiquement des moyens de mise en oeuvre d'une première étape du procédé selon l'invention ;
- la figure 7 est une vue schématique partielle en coupe d'une aube neuve dont la platine comprend une couche de matériau dur à faible coefficient de frottement ;
- la figure 8 est une vue correspondant à la figure 3 et représente la platine de l'aube réparée par le procédé selon l'invention.

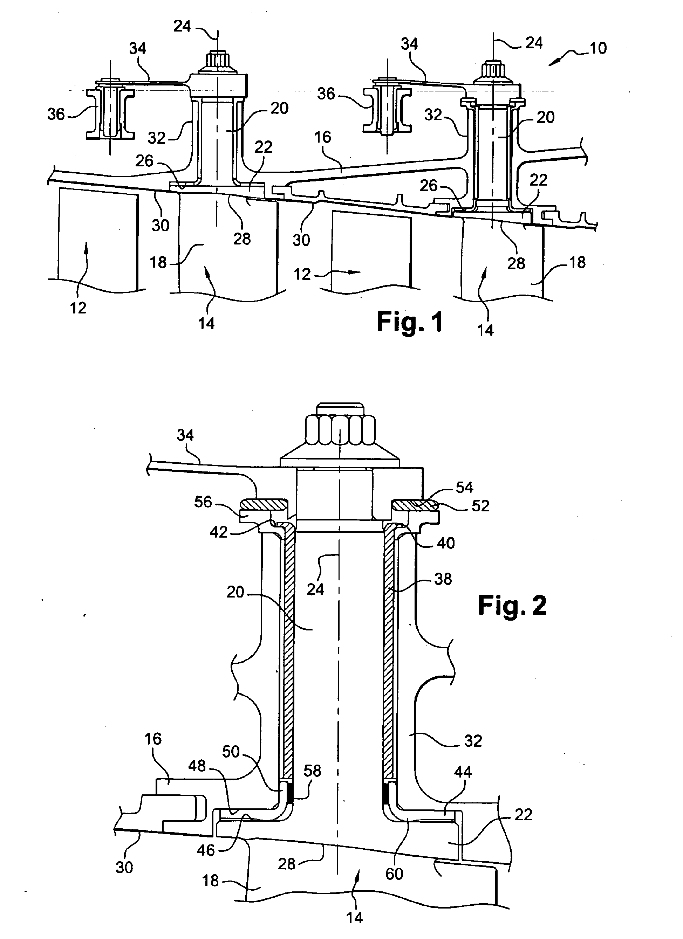

En figure 1, on a représenté schématiquement, en coupe axiale, une partie d'un compresseur haute-pression 10 d'une turbomachine, en particulier d'un turboréacteur d'avion, à plusieurs étages, chaque étage comprenant une rangée annulaire d'aubes mobiles 12 portées par le rotor (non représenté) de la turbomachine et une rangée annulaire d'aubes fixes 14 formant redresseurs portées par un carter 16 du stator de la turbomachine, l'orientation angulaire des aubes 14 étant réglable pour optimiser l'écoulement gazeux dans le compresseur 10.

Chaque aube 14 comprend une pale 18 et une queue cylindrique 20 radialement externe, reliées par un disque ou « platine » 22 s'étendant perpendiculairement à l'axe 24 de l'aube dans un logement 26 correspondant du carter 16, la surface radialement interne 28 du disque étant alignée avec la paroi interne 30 du carter pour ne pas s'opposer à l'écoulement gazeux.

La queue cylindrique 20 de chaque aube 14 s'étend à l'intérieur d'une cheminée cylindrique radiale 32 du carter 16 et son extrémité radialement externe est reliée par une biellette 34 à un anneau de commande 36 qui entoure le carter 16 et qui est associé à des moyens d'actionnement (non représentés) permettant de le faire tourner dans un sens ou dans l'autre autour de l'axe longitudinal du carter 16 pour entraîner les aubes 14 d'une rangée annulaire en rotation autour de leurs axes 24.

Comme on le voit mieux en figure 2, la queue cylindrique 20 de l'aube 14 est centrée et guidée en rotation dans la cheminée cylindrique 32 au moyen d'une douille cylindrique 38 s'étendant dans la cheminée 32 sur une majeure partie de la dimension radiale de la queue 20 et comportant à son extrémité radialement externe un rebord annulaire externe 40 en appui sur un épaulement 42 correspondant de la cheminée.

Une première rondelle de guidage 44 est montée autour de la queue 20, entre la surface annulaire radialement externe 46 de la platine 22 et une surface annulaire 48 correspondante du carter 16, et comporte sur son bord interne un rebord cylindrique 50 radialement externe s'étendant autour de la queue 20, sensiblement sur sa partie radialement interne non recouverte par la douille 38.

Une seconde rondelle de guidage 52 est montée entre une surface annulaire 54 de l'extrémité de la biellette et un rebord annulaire externe 56 de la cheminée.

La rondelle 44 est en contact par son rebord 50 avec un anneau 58 fretté sur l'extrémité radialement interne de la queue 20. Un bossage annulaire 60 est formé sur sa face radialement interne et est en appui sur la surface annulaire radialement externe 46 de la platine 22.

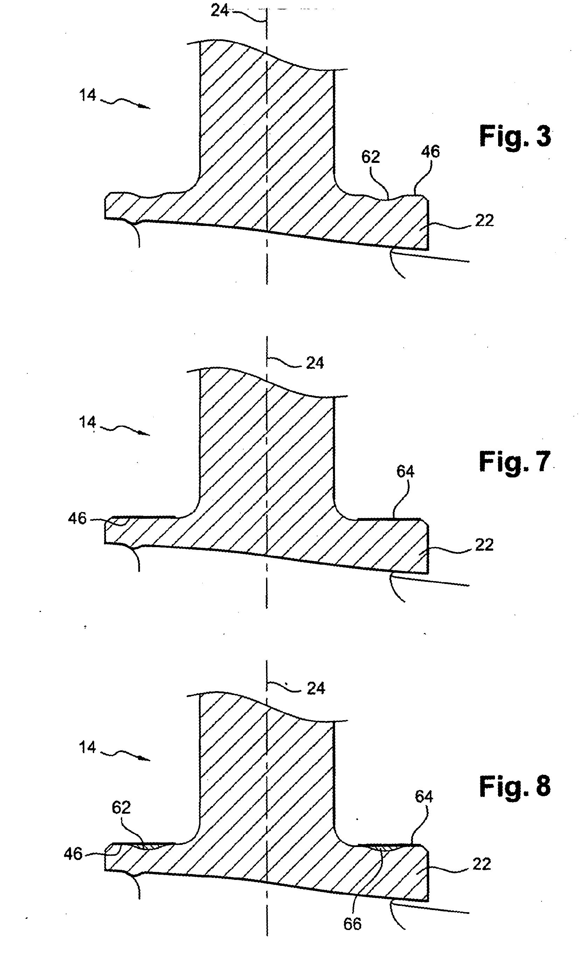

En fonctionnement de la turbomachine et lorsque les aubes 14 sont déplacées angulairement, ces bossages annulaires 60, frottent sur les platines 22 et forment dans celles-ci des rainures annulaires 62 comme cela est schématiquement représenté en figure 3.

La présente invention a pour objet un procédé de réparation d'une platine 22 d'aube présentant un déficit de matière résultant de son usure.

Le procédé consiste à combler ce déficit de matière par dépôt d'un produit métallique par électrolyse, puis à former sur ce produit métallique et sur la partie environnante de la platine 22 au moins une couche mince d'un matériau dur à faible coefficient de frottement.

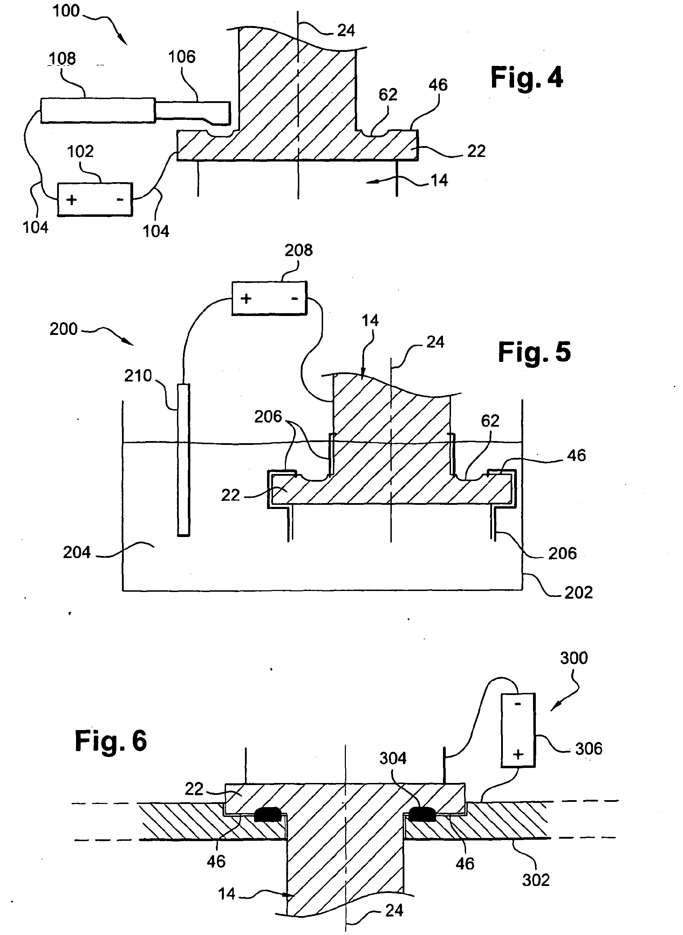

Le dépôt par électrolyse du produit métallique est réalisable de plusieurs façons différentes, comme représenté aux figures 4 à 6.

En figure 4, le produit métallique de rechargement est déposé par électrolyse au tampon au moyen d'un dispositif 100 comprenant une source 102 de courant électrique reliée par des conducteurs 104 à l'aube 14 formant la cathode, et à un tampon 106 qui forme l'anode et est imprégné d'une solution électrolytique et qui est destiné à être déplacé dans la rainure annulaire 62 à combler.

Le tampon 106 est par exemple une électrode en graphite et sa géométrie et sa dimension sont adaptées à la forme et à la dimension de l'usure, la solution électrolytique utilisée étant par exemple du sulfamate de nickel en vue de combler le déficit de matière avec un matériau à base de nickel.

Cette opération peut être effectuée soit manuellement, le dispositif - comprenant une poignée 108, soit automatiquement à l'aide d'un système robotisé.

En figure 5, le produit métallique de rechargement est déposé par électrolyse en bain au moyen d'un dispositif 200 comprenant une cuve 202 remplie d'une solution électrolytique 204 dans laquelle est immergée au moins en partie une aube 14 dont seule la partie de la platine 22 présentant un déficit de matière est en contact avec la solution électrolytique 204, le reste de l'aube 14 étant protégé par des moyens 206 appropriés tels que des rubans adhésifs.

L'aube 14 est reliée à une source 208 de courant électrique pour former la cathode, et une électrode 210 est immergée dans la solution électrolytique 204 et reliée à la source de courant 208 pour former l'anode.

On peut également utiliser une électrode 210 en graphite et du sulfamate de nickel comme solution électrolytique.

En figure 6, le produit métallique est déposé par électrolyse en micro-bain au moyen d'un dispositif 300 comprenant un bac 302 qui est conformé pour recevoir au moins une aube 14 et une solution électrolytique 304 qui est en contact avec cette aube seulement au niveau de la partie de la surface 46 présentant un déficit de matière. Une source 306 de courant électrique est reliée à chaque aube 14 pour former les cathodes et au bac 302 pour former l'anode.

Un usinage de rectification du produit métallique déposé sur la platine 22 est préférentiellement effectué, à l'aide de moyens appropriés, avant de déposer une couche mince de matériau dur à faible coefficient de frottement, pour améliorer la fixation de la couche mince sur le produit métallique.

La couche mince de matériau dur peut également être déposée par électrolyse au tampon, la solution électrolytique étant choisie de manière à former sur le produit métallique et sur la partie environnante de la platine 22 une couche de matériau d'une dureté supérieure à celle du produit métallique et à celle de la rondelle de guidage 44. De tels matériaux sont par exemple à base de cobalt, nickel-cobalt, nickel-tungstène, ou cobalt-tungstène.

Plusieurs couches de matériau dur peuvent être déposées sur le produit métallique, la couche extérieure destinée à être en contact avec le bossage de la rondelle 44 étant choisie pour limiter les frottements avec ce bossage et étant par exemple à base de chrome.

En variante, la couche mince de matériau dur est formée par projection thermique, par exemple par procédé plasma ou HVOF (High Velocity Oxygen Fuel) ou autre, ou par dépôt PVD (Physical Vapor Deposition), et est à base de cobalt, de carbure de tungstène, de carbure de chrome, ou autre.

La couche mince de matériau dur pourra également être soumise à un usinage de rectification afin de supprimer d'éventuels défauts de surface.

L'épaisseur de la couche mince de matériau dur déposée sur le produit métallique est typiquement comprise entre 40 et 50 µm.

La présente invention concerne également une aube 14 à calage variable d'un étage redresseur de turbomachine, présentant sur sa platine 22 une couche mince de matériau dur à faible coefficient de frottement déposée par l'une des techniques précitées.

En figure 7, cette couche mince 64 a été déposée directement sur la platine 22 d'une aube neuve 14, et en figure 8, cette couche mince 64 a été formée sur un produit métallique 66 de rechargement déposé par l'une des techniques précitées dans une rainure annulaire 62 de la platine d'une aube 14 usée.

La protection d'une aube neuve permet d'allonger suffisamment sa durée de service pour éviter tout risque d'incident jusqu'à la première visite de maintenance régulièrement prévue.

## Revendications

1. Procédé de réparation d'une surface de frottement (46) d'une aube (14) à calage variable d'une turbomachine telle qu'un turboréacteur d'avion, **caractérisé en ce que** cette surface étant une surface de frottement sur des moyens de guidage de l'aube en rotation et présentant un déficit de matière résultant de son usure, il consiste à combler ce déficit de matière par dépôt d'un produit métallique (66) par électrolyse, puis à former sur le produit métallique (66) déposé et sur la partie environnante de ladite surface (46) au moins une couche mince (64) d'un matériau dur à faible coefficient de frottement.

2. Procédé selon la revendication 1, **caractérisé en ce que** le produit métallique (66) est déposé sur ladite surface (46) de l'aube (14) par électrolyse au tampon.

3. Procédé selon la revendication 1, **caractérisé en ce que** le produit métallique (66) est déposé sur ladite surface (46) de l'aube (14) par électrolyse en bain.

4. Procédé selon la revendication 1, **caractérisé en ce que** le produit métallique (66) est déposé sur ladite surface (46) de l'aube (14) par électrolyse en micro-bain, la solution électrolytique recouvrant uniquement ou presque uniquement la zone de la surface (46) présentant un déficit de matière.

5. Procédé selon l'une des revendications précédentes, **caractérisé en ce que** le produit métallique (66) déposé comprend du nickel.

6. Procédé selon l'une des revendications précédentes, **caractérisé en ce qu**'on utilise du sulfamate de nickel comme solution électrolytique.

7. Procédé selon l'une des revendications précédentes, **caractérisé en ce qu**'on procède à un usinage de rectification du produit métallique (66) déposé avant de former sur celui-ci ladite couche mince (64) de matériau dur.

8. Procédé selon l'une des revendications précédentes, **caractérisé en ce que** la couche mince (64) de matériau dur est formée par électrolyse au tampon, ou par projection thermique, par exemple du type plasma ou HVOF, ou par dépôt PVD.

9. Procédé selon l'une des revendications précédentes, **caractérisé en ce que** la couche mince (64) de matériau dur est à base de nickel, cobalt, tungstène, ou chrome, ou d'une combinaison de ces éléments telle que du nickel-cobalt, nickel-tungstène, ou cobalt-tungstène.

10. Procédé selon l'une des revendications précédentes, **caractérisé en ce que** la couche mince (64) présente une épaisseur comprise entre 40 et 50 µm.

11. Aube (14) à calage variable pour un étage redresseur de turbomachine, en particulier de turboréacteur d'avion, l'aube étant guidée en rotation autour de son axe (24) dans une cheminée (32) d'un carter (16) de la turbomachine et comportant à son extrémité radialement externe une surface (46) venant en appui sur un bossage annulaire (60) d'une rondelle de guidage (44) montée autour d'une queue cylindrique (20) de l'aube (14) entre ladite surface (46) et le carter (16) de la turbomachine, **caractérisée en ce que** la partie de la surface (46) de l'aube (14) en contact avec le bossage annulaire (60) de la rondelle (44) est recouverte par une couche mince (64) de matériau dur à faible coefficient de frottement.

12. Aube (14) selon la revendication 11, **caractérisée en ce que** la couche mince (64) de matériau dur a été déposée par électrolyse au tampon, par projection thermique au plasma ou du type HVOF, ou par procédé du type PVD sur ladite surface (46) de l'aube neuve.

13. Aube (14) selon la revendication 11, **caractérisée en ce que** la couche mince (64) de matériau dur recouvre un produit métallique (66) de rechargement, déposé sur ladite surface (46) de l'aube (14) après usure de celle-ci par frottement sur le bossage annulaire (60) de la rondelle de guidage (44).

## Claims

1. Method for repairing a rubbing surface (46) of a variable-pitch blade (14) for a turbomachine such as an aircraft turbine engine, **characterized in that**, the surface being a surface rubbing against means for guiding blade in rotation and exhibiting a deficit of material as a result of wear thereof, the method consists in filling this deficit of material by depositing a metallic product (66) using electrolysis, then in forming at least one thin layer (64) of a hard material with a low coefficient of friction on the deposited metallic product (66) and on the surrounding part of said surface (46).

2. Method according to Claim 1, **characterized in that** the metallic product (66) is deposited on said surface (46) of the blade (14) by buffer electrolysis.

3. Method according to Claim 1, **characterized in that** the metallic product (66) is deposited on said surface (46) of the blade (14) by bath electrolysis.

4. Method according to Claim 1, **characterized in that** the metallic product (66) is deposited on said surface (46) of the blade (14) by bath electrolysis in miniature, the electrolytic solution covering only or almost only that region of the surface (46) that exhibits a deficit of material.

5. Method according to any of the preceding claims, **characterized in that** the deposited metallic product (66) contains nickel.

6. Method according to any of the preceding claims, **characterized in that** nickel sulphamate is used by way of electrolytic solution.

7. Method according to any of the preceding claims, **characterized in that** the deposited metallic product (66) is ground before said thin layer (64) of hard material is formed thereon.

8. Method according to any of the preceding claims, **characterized in that** the thin layer (64) of hard material is formed by buffer electrolysis or by thermal spraying, for example of the plasma or HVOF type, or by PVD.

9. Method according to any of the preceding claims, **characterized in that** the thin layer (64) of hard material is based on nickel, cobalt, tungsten or chromium, or on a combination of these elements such as nickel-cobalt, nickel-tungsten or cobalt-tungsten.

10. Method according to any of the preceding claims, **characterized in that** the thin layer (64) has a thickness of between 40 and 50 µm.

11. Variable-pitch blade (14) for a stator stage of a turbomachine, particularly an aircraft turbine engine, the blade being guided in rotation about its axis (24) in a duct (32) of a casing (16) of the turbomachine and at its radially outermost end comprising a surface (46) bearing against an annular boss (60) of a guide washer (44) mounted around a cylindrical shank (20) of the blade (14) between said surface (46) and the turbomachine casing (16), **characterized in that** the part of the surface (46) of the blade (14) that is in contact with the annular boss (60) of the washer (44) is covered with a thin layer (64) of hard material having a low coefficient of friction.

12. Blade (14) according to Claim 11, **characterized in that** the thin layer (64) of hard material has been deposited by buffer electrolysis, by hot plasma or HVOF spraying or by a method of the PVD type, onto said surface (46) of the new blade.

13. Blade (14) according to Claim 11, **characterized in that** the thin layer (64) of hard material covers a metallic hard-facing product (66) deposited on said surface (46) of the blade (14) after this surface has become worn through its rubbing against the annular boss (60) of the guide washer (44).

## Patentansprüche

1. Verfahren zur Reparatur einer Reibungsfläche (46) einer verstellbaren Schaufel (14) einer Turbomaschine wie beispielsweise eines Flugzeug-Turbotriebwerks,
**dadurch gekennzeichnet,**
**dass** es darin besteht, bei dieser Oberfläche, die eine Reibungsfläche für Führungsmittel der Schaufel in ihrer Drehbewegung ist und auf Grund ihrer Abnutzung ein Materialdefizit aufweist, dieses Materialdefizit mittels Auftragen eines Produkts aus Metall (66) durch Elektrolyse auszugleichen, sodann auf dem aufgetragenen Produkt aus Metall (66) und auf dem diese Oberfläche (46) umgebenden Bereich mindestens eine dünne Schicht (64) eines harten Materials mit niedrigem Reibungskoeffizient auszubilden.

2. Verfahren nach Anspruch 1,
**dadurch gekennzeichnet,**
**dass** das Produkt aus Metall (66) auf dieser Oberfläche (46) der Schaufel (14) durch Puffer-Elektrolyse aufgetragen wird.

3. Verfahren nach Anspruch 1,
**dadurch gekennzeichnet,**
**dass** das Produkt aus Metall (66) auf dieser Oberfläche (46) der Schaufel (14) durch Elektrolyse im galvanischen Bad aufgetragen wird.

4. Verfahren nach Anspruch 1,
**dadurch gekennzeichnet,**
**dass** das Produkt aus Metall (66) auf dieser Oberfläche (46) der Schaufel (14) durch Elektrolyse im Mikrobad aufgetragen wird, wobei die elektrolytische Lösung ausschließlich oder nahezu ausschließlich den Bereich der Oberfläche (46) bedeckt, die ein Materialdefizit aufweist.

5. Verfahren nach einem der vorherigen Ansprüche,
**dadurch gekennzeichnet,**
**dass** das aufgetragene Produkt aus Metall (66) Nickel umfasst.

6. Verfahren nach einem der vorherigen Ansprüche,
**dadurch gekennzeichnet,**
**dass** als elektrolytische Lösung Nickelsulfamat verwendet wird.

7. Verfahren nach einem der vorherigen Ansprüche,
**dadurch gekennzeichnet,**
**dass** eine Schleifbearbeitung an dem aufgetragenen Produkt aus Metall (66) vorgenommen wird, bevor auf diesem die dünne Schicht (64) aus hartem Material ausgebildet wird.

8. Verfahren nach einem der vorherigen Ansprüche,
**dadurch gekennzeichnet,**
**dass** die dünne Schicht (64) aus hartem Material durch Puffer-Elektrolyse oder durch thermisches Spritzen, beispielsweise vom Plasmatyp oder HVOF-Typ, oder durch PVD-Auftragen ausgebildet wird.

9. Verfahren nach einem der vorherigen Ansprüche,
**dadurch gekennzeichnet,**
**dass** die dünne Schicht (64) aus hartem Material auf Basis von Nickel, Kobalt, Wolfram oder Chrom oder einer Kombination dieser Elemente wie beispielsweise Nickel-Kobalt, Nickel-Wolfram oder Kobalt-Wolfram besteht.

10. Verfahren nach einem der vorherigen Ansprüche,
**dadurch gekennzeichnet,**
**dass** die dünne Schicht (64) eine Stärke von 40 bis 50 µm aufweist.

11. Verstellbare Schaufel (14) einer Leitapparatstufe einer Turbomaschine insbesondere eines Flugzeug-Turbotriebwerks, wobei die Schaufel in der Drehbewegung um ihre Achse (24) in einem Schacht (32) eines Gehäuses (16) der Turbomaschine geführt wird und an ihrem radial äußeren Ende eine Oberfläche (46) aufweist, die in Anlage an einer ringförmigen Erhebung (60) einer Führungsscheibe (44) kommt, welche um einen zylindrischen Schwanz (20) der Schaufel (14) herum zwischen dieser Oberfläche (46) und dem Gehäuse (16) der Turbomaschine angebracht ist,
**dadurch gekennzeichnet,**
**dass** der Bereich der Oberfläche (46) der Schaufel (14), der sich mit der ringförmigen Erhebung (60) der Führungsscheibe (44) in Kontakt befindet, mit einer dünnen Schicht (64) aus hartem Material mit niedrigem Reibungskoeffizient überzogen wird.

12. Schaufel (14) nach Anspruch 11,
**dadurch gekennzeichnet,**
**dass** die dünne Schicht (64) aus hartem Material durch Puffer-Elektrolyse, durch thermisches Plasma-Spritzen oder HVOF-Spritzen oder durch PVD-Verfahren auf dieser Oberfläche (46) der neuen Schaufel ausgebildet wird.

13. Schaufel (14) nach Anspruch 11,
**dadurch gekennzeichnet,**
**dass** die dünne Schicht (64) aus hartem Material ein Auffüllprodukt aus Metall (66) überzieht, das auf dieser Oberfläche (46) der Schaufel (14) nach deren Abnutzung durch Reibung an der ringförmigen Erhebung (60) der Führungsscheibe (44) aufgetragen wurde.
